# EUROPEAN PATENT APPLICATION

(11) **EP 1 501 044 A2**
(43) Date of publication of application: **26.01.2005**
(21) Application number: 04017372.6
(22) Date of filing: 22.07.2004
(51) Int. Cl.: G06K 19/07

(54) **Passive keyless entry system**

(30) Priority: 25.07.2003 JP 2003201858
(71) Applicant: ALPS ELECTRIC CO., LTD., Tokyo 145-8501 (JP)
(72) Inventor: Masudaya, Ota-Ku Tokyo, 145-8501 (JP)
(74) Representative: Klunker . Schmitt-Nilson . Hirsch

(57) **Abstract**

[Object] To provide a passive keyless entry system which prevents control ICs from being damaged during its normal detecting operation in presence of high-level signal.

[Solving Means] The portable device 2 is provided with a control IC 3, an antenna 4 having both ends thereof connected to input and output terminals of the control IC 3 for wirelessly transmitting or receiving signals, a level detector 5 for detecting the receiving level of the antenna 4, a Qdump circuit 6 that operates only when the level detector 5 detects the receiving level which exceeds an allowable value of the control IC 3 and that varies the quantity of Qdump in accordance with the receiving level of the antenna 4, and a time constant circuit 7 or a latch circuit 8 for holding the Qdump circuit 6 in its operational state in an OFF period of an LF modulation signal.

## Description

### BACKGROUND OF THE INVENTION

### 1. Field of the Invention

The present invention relates to a passive keyless entry system for controlling engine starting/stopping, door locking/unlocking, or the like of an automobile, and more specifically, to a system capable of reducing the effects caused by the input of high-level signals acting on a portable device, to enhance the reliability of communication between a fixed device and a portable device.

### 2. Description of the Related Art

Recently, automobiles are equipped with a keyless entry system that remotely controls engine starting/stopping, door locking/unlocking, or the like of the automobiles, by a wireless communication between a fixed device installed in the automobiles and a portable device carried by a user.

The keyless entry system of this type includes an active keyless entry system that wirelessly transmits a command signal from a portable device to a fixed device by operating a switch mounted on the portable device, and a passive keyless entry system that wirelessly transmits a wake-up signal and a data signal from a fixed device to a portable device. Here, the passive keyless entry system wirelessly transmits a required command signal from the portable device, which has received the wake-up signal and the data signal, to the fixed device (for example, refer to US Patent No. 6317035 (Fig. 1)).

The active keyless entry system has the following characteristics. Since a device to be controlled is not operated unless a user operates the switch mounted on the portable device, the occurrence of automobile thefts is rare when a door is not unlocked by mistake.

Meanwhile, the passive keyless entry system has the following characteristics. Since a device to be controlled can be automatically operated without operating the switch mounted on the portable device, its operation can be made more convenient for the users. Further, since there is n need to mount any switch on the portable device, the passive keyless entry system can be made small. Moreover, since the number of command signals transmitted from the portable device to the fixed device is not limited by that of switches mounted on the portable device, the performance of the keyless entry system can be easily improved.

### SUMMARY OF THE INVENTION

However, in the above keyless entry systems, the portable device is provided with an antenna and a control IC for controlling the transmission and reception of signals. Hence, when the portable device is put inside of an automobile, if a large signal, i.e., a high-level signal, above the allowable level of a detector circuit is input to the portable device, there are problems in that the control IC and a detector circuit in the control IC may be damaged, and demodulation of a normal signal cannot be performed properly.

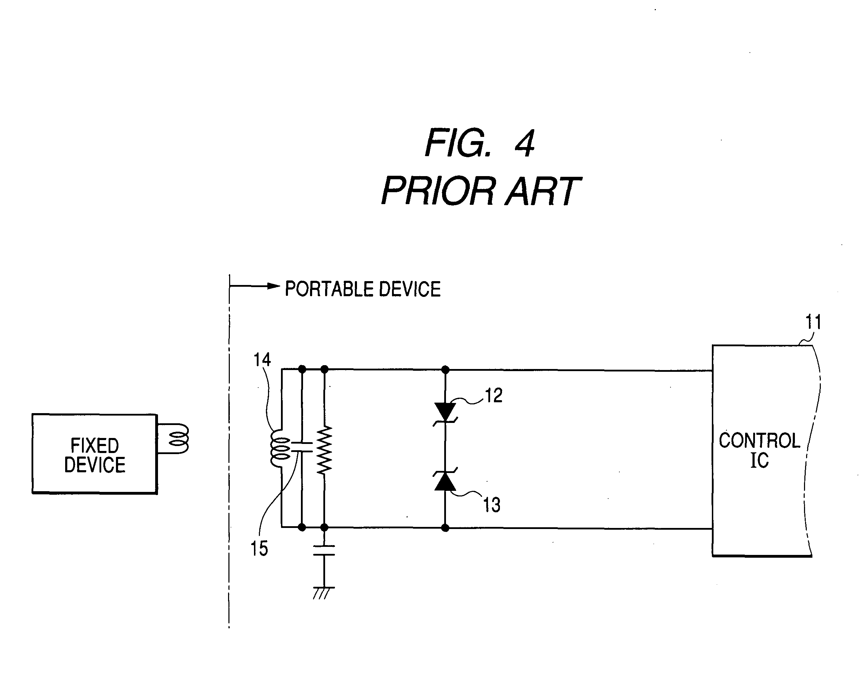

In order to avoid such problems, as shown in Fig. 4, Zenor diodes 12 and 13 serving as means to protect a control IC 11 are connected to the portable device of a conventional passive keyless entry system, between input and output terminals of the control IC 11. Also, reference numerals 14 and 15 in the drawing denote an antenna and an electrostatic capacitor, respectively.

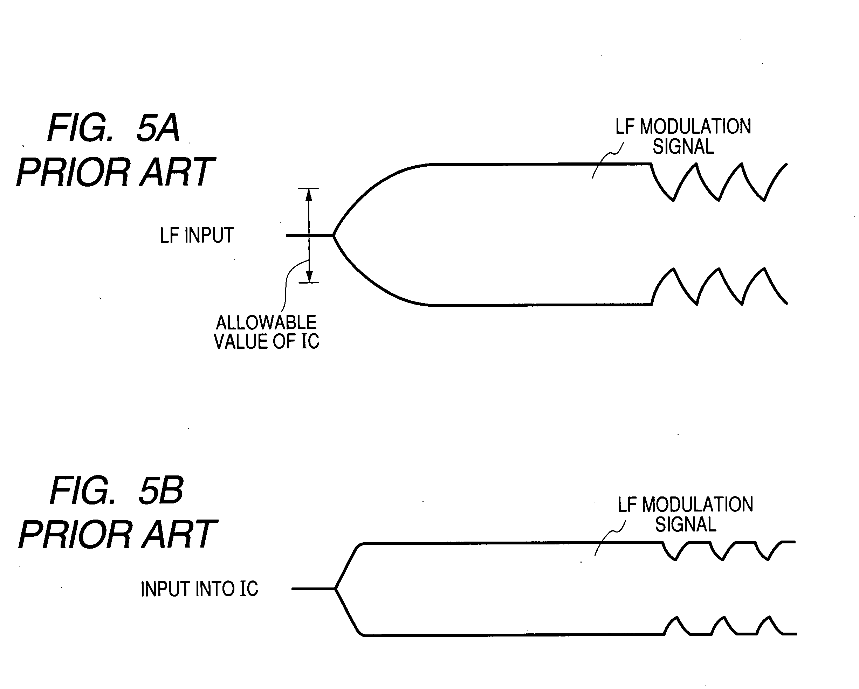

Meanwhile, if the Zenor diodes 12 and 13 as means to protect the control IC 11, are connected to between the input and output terminals of the control IC 11, as shown in Figs 5(A) and 5(B), the level of a signal input to the IC can be lowered to below the level regulated by the Zenor diodes 12 and 13, but the degree of modulation of a signal (hereinafter, referred to as an LF modulation signal) transmitted from the fixed device is also lowered along with the lowering of the level of the signal input into the IC. Therefore, problems easily occur in that it is difficult for the control IC 11 to perform normal detection and at the worst case, it becomes impossible to perform a satisfactory detection.

The present invention has been achieved to overcome the conventional disadvantages. It is therefore an object of the invention to provide a passive keyless entry system which prevents control ICs from being damaged during its normal detecting operation in presence of high-level signal.

In order to solve the above problems, the present invention provides a passive keyless entry system comprised of a fixed device and a portable device, wirelessly transmitting a wake-up signal and a data signal from the fixed device to the portable device, and wirelessly transmitting a command signal from the portable device, which has received the wake-up signal and the data signal, to the fixed device, thereby remotely controlling a device to be controlled provided at the fixed device. The portable device comprises a detector circuit; an antenna having both ends thereof connected to input and output terminals of the detector circuit for wirelessly transmitting or receiving signals; a level detector for detecting the receiving level of the antenna; a Qdump circuit that operates only when the level detector detects a receiving level which exceeds an allowable value of the detector circuit, and that varies the quantity of Qdump in accordance with the receiving level of the antenna; and an operation holding circuit for holding the Qdump circuit in its operational state even in an OFF period of an LF modulation signal.

As described above, when a circuit for protecting the detector circuit comprises a Qdump circuit that operates only when the receiving level exceeding an allowable value of the detector circuit is detected by the level detector, and whose operation is held by the operation holding circuit even in an OFF period of the LF modulation signal, a signal exceeding an allowable value can be prevented from being input to the detector circuit. As a result, the control IC can be prevented from being damaged, and the degree of modulation input to the detector circuit can be prevented from being lowered. Therefore, the detection by the control IC can be suitably performed.

Further, the present invention provides the passive keyless entry system of the above construction in which the operation holding circuit includes a time constant circuit or a latch circuit.

Even when the operation holding circuit includes the time constant circuit or the latch circuit, the operation of the Qdump circuit can be held in an OFF period of the LF modulation signal. Therefore, the degree of modulation of the LF demodulation signal input to the control IC can be prevented from being lowered and the detection by the control IC can be suitably performed.

### BRIEF DESCRIPTION OF THE DRAWINGS

Fig. 1 is a block diagram of a passive keyless entry system according to an embodiment of the present invention;
Fig. 2 is a waveform diagram showing effects of the passive keyless entry system according to the embodiment of the present invention;
Fig. 3 is a block diagram of a passive keyless entry system according to another embodiment of the present invention;
Fig. 4 is a block diagram of a passive keyless entry system according to an example of conventional art;
Fig. 5 is a waveform diagram showing problems of the passive keyless entry system according to the example of conventional art.

### DESCRIPTION OF THE PREFERRED EMBODIMENT

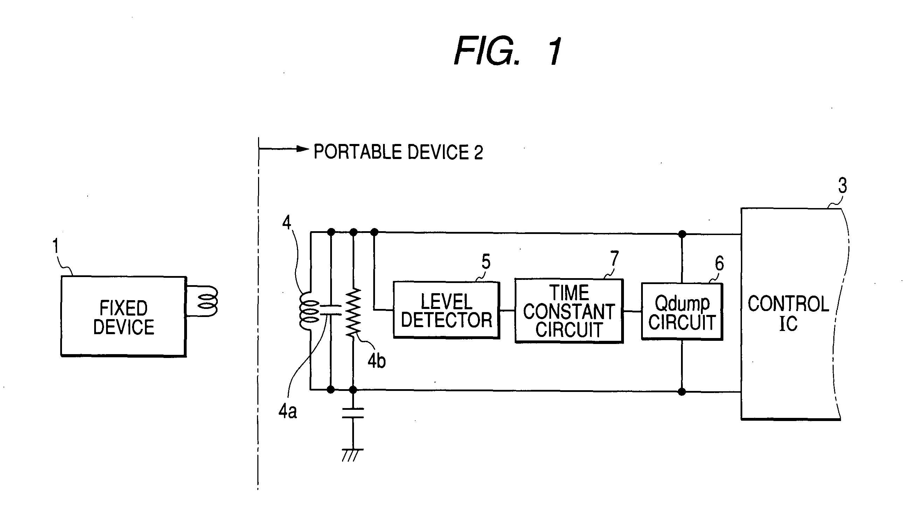

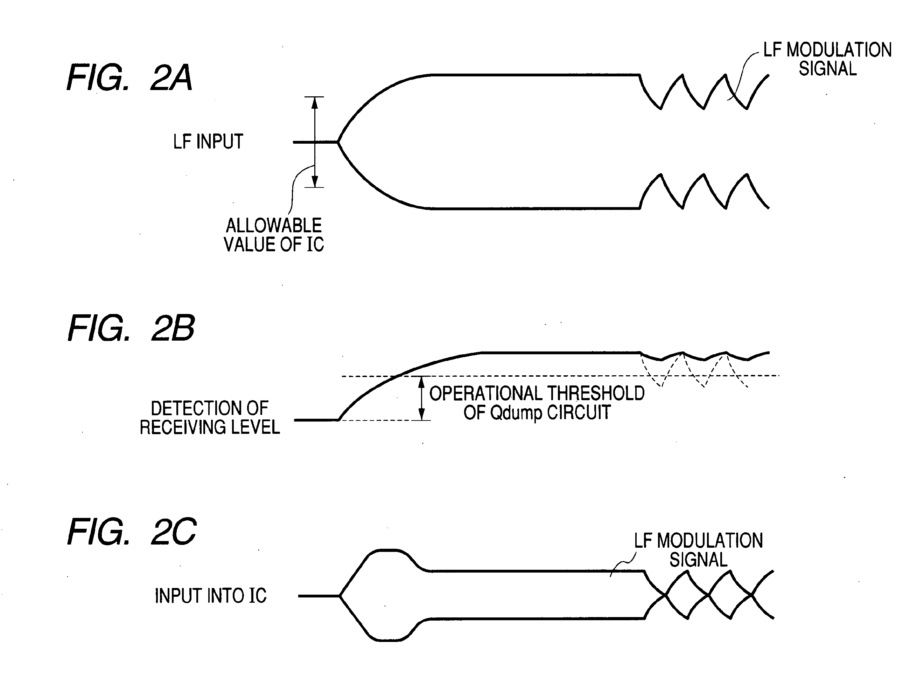

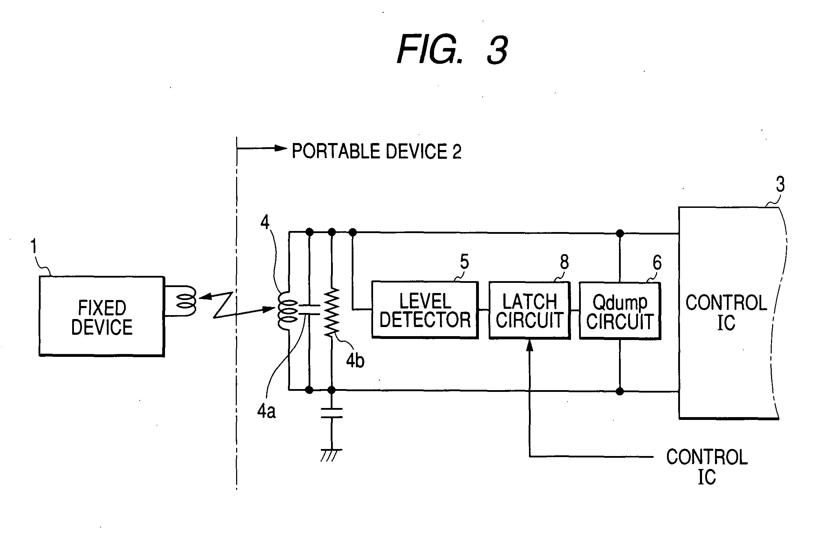

A passive keyless entry system according to the present invention will now be explained with reference to Figs. 1 to 3, wherein Fig. 1 is a block diagram of a passive keyless entry system according to an embodiment, Fig. 2 is a waveform diagram showing effects of the passive keyless entry system according to the embodiment, and Fig. 3 is a block diagram of a passive keyless entry system according to another embodiment.

As shown in Fig. 1, the passive keyless entry system of this embodiment is comprised of a fixed device 1 and a portable device 2. The portable device 2 is provided with a control IC 3, an antenna 4 having both ends thereof connected to input and output terminals of the control IC 3 for wirelessly transmitting or receiving signals, an electrostatic capacitor 4a and a resistor 4b for adjusting the resonant frequency of the antenna 4, a level detector 5 for detecting the receiving level of the antenna 4, a Qdump circuit 6 for varying the magnitude of Qdump in accordance with the receiving level of the antenna 4, and a time constant circuit 7 for holding the operation of the Qdump circuit 6 in an OFF period of an LF modulation signal.

The fixed device 1 is installed in an automobile to wirelessly transmit a wake-up signal and a data signal superposed on a low frequency of modulated waves of, for example, 125 KHz to the portable device 2. The fixed device 1 receives a command signal from the portable device 2 to control a device to be controlled which is connected to the fixed device 1, for example, engine starting/stopping, door locking/unlocking, or the like of an automobile.

After receiving the wake-up signal and the data signal wirelessly transmitted from the fixed device 1, the portable device 1 wirelessly transmits a required command signal to remotely control the device to be controlled which is connected to the fixed device 1.

The control IC 3 includes a detector circuit and a demodulator circuit (omitted in the drawing). The control IC receives a wake-up signal and a data signal from the fixed device 1 and transmits a command signal to the fixed device 1.

The level detector 5 always monitors the receiving level of the antenna 4, and supplies a signal proportional to the receiving level of the antenna 4 to the Qdump circuit 6 and the time constant circuit 7.

The Qdump circuit 6 does not operate when the receiving level of the antenna 4 is at a level that does not affect the performance of the control IC 3, and the Qdump circuit 6 is adjusted to operate only when the receiving level of the antenna 4 is at a level that markedly affects the performance of the control IC 3.

The time constant circuit 7 extends the ON time of an LF modulation signal by time corresponding to the OFF period of the LF modulation signal, which enables the operation of the Qdump circuit 6 to be held even in the OFF period of the LF modulation signal.

As shown in Figs. 2 (A) to 2(C), in the passive keyless entry system of the present invention constructed as described above, when the receiving level of the antenna 4 reaches a predetermined operational threshold of the Qdump circuit 6, the Qdump circuit 6, and the receiving level of a signal input to the control IC 3 is lowered to the level that does dot affect the performance of the control IC 3. Hence, the damage to the control IC 3 caused by input of a high-level signal can be prevented. Further, since the passive keyless entry system has the time constant circuit 7 so that the operation of the Qdump circuit 6 can be held even in an OFF period of an LF modulation signal, as shown in Fig 2(C), the degree of modulation required for detection of a received signal can be maintained, and the received signal can be surely detected.

Moreover, although the time constant circuit 7 is used as the operation holding circuit of the Qdump circuit 6 in the above-described embodiment, the keynote of the present invention is not limited thereto and, as shown in Fig. 3, a latch circuit 8 may be used as the operation holding circuit. The latch circuit 8 is turned on/off by the means of the control IC 3. The other parts are the same as those of the passive keyless entry system according to the first embodiment, and thus the description thereof is omitted.

Further, although the detector circuit is formed in the control IC 3 in the above embodiments, it may be an independent IC, which is formed separately from the control IC. The need for the present invention will be more apparent, in particular, when a circuit is formed as an IC.

As described above, according to the passive keyless entry system of the present invention, since a circuit for protecting the control IC comprises a Qdump circuit that operates only when the receiving level exceeding an allowable value of the control IC is detected by the level detector and whose operation is held by the operation holding circuit even in an OFF period of the LF modulation signal, a signal exceeding an allowable value can be prevented from being input to the control IC. As a result, the control IC can be prevented from being damaged, and the degree of modulation input to the control IC can be prevented from being lowered. Therefore, the detection by the control IC can be suitably performed.

## Claims

1. A passive keyless entry system comprised of a fixed device and a portable device, wirelessly transmitting a wake-up signal and a data signal from the fixed device to the portable device, and wirelessly transmitting a command signal from the portable device, which has received the wake-up signal and the data signal, to the fixed device, thereby remotely controlling a device to be controlled provided at the fixed device, wherein the portable device comprises:
a detector circuit;
an antenna having both ends thereof connected to input and output terminals of the detector circuit for wirelessly transmitting or receiving signals;
a level detector for detecting the receiving level of the antenna;
a Qdump circuit that operates only when the level detector detects a receiving level which exceeds an allowable value of the detector circuit, and that varies the quantity of Qdump in accordance with the receiving level of the antenna; and
an operation holding circuit for holding the Qdump circuit in its operational state, even in an OFF period when signals are not transmitted from the fixed device.

2. The passive keyless entry system according to claim 1, wherein the operation holding circuit includes a time constant circuit.

3. The passive keyless entry system according to claim 1, wherein the operation holding circuit includes a latch circuit.
